# EUROPÄISCHE PATENTSCHRIFT

(11) **EP 3 270 479 B1**
(45) Veröffentlichungstag und Bekanntmachung des Hinweises auf die Patenterteilung: **12.02.2020**
(21) Anmeldenummer: 17001075.5
(22) Anmeldetag: 23.06.2017
(51) Int. Cl.: H02G 1/14, B29C 33/00

(54) **VERNETZUNGSVORRICHTUNG**
CURING DEVICE
DISPOSITIF DE RÉTICULATION

(30) Priorität: 15.07.2016 DE 102016008620; 16.09.2016 DE 102016011222
(43) Veröffentlichungstag der Anmeldung: 17.01.2018
(73) Patentinhaber: MASCHINENBAU SCHOLZ GMBH & CO. KG, 48653 Coesfeld (DE)
(72) Erfinder: Funke, Frank, 48653 Coesfeld (DE)
(74) Vertreter: Hauck Patentanwaltspartnerschaft mbB

(56) Entgegenhaltungen:
- EP-A2- 0 470 396
- CN-A- 102 231 497
- DE-A1- 2 431 644
- DE-A1- 3 132 542
- DE-B- 1 051 927
- DE-C- 712 957
- JP-A- S5 657 272
- US-A- 3 880 557
- US-A- 4 145 176
- ROMUALD LEMAITRE ET AL: "HIGH PRESSURE MOULDING TECHNOLOGY", SUBOPTIC 2007, 16. Mai 2007 (2007-05-16), XP055393510, http://www.suboptic.org/wp-content/uploads /2014/10/We1.14.pdf

## Beschreibung

Die vorliegende Erfindung betrifft eine Vorrichtung zur Vernetzung der Isolierung von elektrischen Kabeln, insbesondere einer Verbindungsstelle derselben.

Elektrische Kabel besitzen Kunststoffisolierungen, die einem Vernetzungsvorgang unterzogen werden müssen, um ihren Endzustand zu erhalten. Hierbei werden durch Einwirkung von Wärme und Druck und ggf. Vernetzungsmitteln Substanzen, die lineare oder verzweigte Makromoleküle gleicher oder unterschiedlicher chemischer Identität aufweisen, miteinander zu dreidimensionalen polymeren Netzwerken verknüpft. Die vorliegende Erfindung betrifft hierbei die Vernetzung von Kabelisolierungen, insbesondere auch von den Isolierungen von Verbindungsstellen von Kabeln. Derartige Isolierungen bestehen beispielsweise aus Polyethylen, das erfindungsgemäß vernetzt wird.

Bei den Kabelverbindungsstellen wird die entsprechende Isolierung beispielsweise durch Umwickeln mit Bändern oder durch Extrudieren von geeigneten Verbindungsstücken hergestellt. Nach der Anordnung der entsprechenden Isolierung an der Verbindungsstelle findet eine Vernetzung statt.

Aus der DE 31 32 542 A1 ist eine Vorrichtung mit den Merkmalen des Oberbegriffs von Patentanspruch 1 bekannt. Bei dieser Vorrichtung ist der am jeweiligen axialen Ende des zylindrischen Raumes angeordnete Konus fest in den entsprechenden Halbschalen des Druckbehälters angeordnet. Der Konus ist hierbei als elastischer Dichtkörper ausgebildet, der bei Überdruckerzeugung im Innenraum des Druckbehälters elastisch verformt wird.

Der vorliegenden Erfindung liegt die Aufgabe zugrunde, eine Vorrichtung der eingangs genannten Art zu schaffen, mit der sich derartige Vernetzungsvorgänge besonders effizient durchführen lassen.

Diese Aufgabe wird erfindungsgemäß bei einer Vorrichtung der angegebenen Art durch die kennzeichnenden Merkmale von Patentanspruch 1 gelöst.

Die erfindungsgemäß ausgebildete Vorrichtung umfasst einen Druckbehälter, der im geschlossenen Zustand einen zylindrischen Raum zur Aufnahme des Kabels bzw. der Kabelverbindungsstelle begrenzt. In diesem Raum wird eine zur Vernetzung der vorhandenen Isolierung geeignete Temperatur bzw. ein erhöhter Druck erzeugt. Wichtig ist dabei, dass die Eintrittsöffnung bzw. die Austrittsöffnung des entsprechenden Kabels an den beiden axialen Enden des Druckbehälters korrekt abgedichtet sind, damit ein unter Druck stehendes Gas nicht aus dem zylindrischen Innenraum entweichen kann. Um dies zu bewerkstelligen, sieht die Erfindung einen Konus am jeweiligen axialen Ende des zylindrischen Raumes vor, der in einer entsprechenden konischen Innenführung der beiden Schalen des Druckbehälters axial beweglich gelagert ist. Das Kabel ist durch diesen Konus geführt. Durch den im zylindrischen Raum herrschenden Überdruck wird der jeweilige Konus in seiner konischen Innenführung axial nach außen gedrückt bzw. bewegt, bis er in abgedichteter Weise mit der Außenseite des durch den Konus geführten Kabels in abgedichteten Eingriff tritt. Hierdurch liegt der Konus dicht am Kabel an, so dass ein Gasaustritt verhindert wird.

Nach Beendigung des Vernetzungsvorgangs wird der Druck im zylindrischen Innenraum des Druckbehälters auf Normaldruck reduziert, so dass nach dem Öffnen des Behälters durch Aufklappen der Oberschale der Konus wieder axial nach innen bewegt und aus seinem Eingriff mit dem Kabel entfernt werden kann.

Um den axial beweglichen Konus gegenüber seiner Innenführung abzudichten, ist eine Dichtung vorgesehen. Diese Dichtung ist so ausgebildet, dass sie eine Axialbewegung des jeweiligen Konus bei Druckbeaufschlagung und Druckreduzierung des Druckbehälters ermöglicht, ohne dabei ihre Dichtwirkung zu verlieren. Dies wird bei einer speziellen Ausführungsform der Erfindung dadurch erreicht, dass die Dichtung als plastisch verformbares Dichtungsband ausgebildet ist, das bei der entsprechenden Axialbewegung des Konus plastisch verformt wird und hierdurch in jeder Axiallage des Konus eine korrekte Abdichtung bewirkt.

Das Dichtungsband ist dabei vorzugsweise im Bereich des Spaltes zwischen Konus und Unterschale auf der Oberseite der Unterschale angeordnet, so dass es bei aufgeklappter Oberschale im Spalt zwischen Konus und Führung auf der Oberseite der Unterschale positioniert werden kann.

Durch die axiale Auswärtsbewegung des Konus infolge des erhöhten Drucks im Innenraum des Druckbehälters wird der Konus gegen das Kabel gedrückt, so dass eine einwandfreie Dichtung zwischen Kabel und Konus erreicht wird, während das Dichtungsband für eine einwandfreie Abdichtung zwischen Konus und Konusführung sorgt.

Das angeordnete Dichtungsband ist zweckmäßigerweise auf beiden Seiten der an den Konus angrenzenden Unterschale vorgesehen. Wie erwähnt, wird das Dichtungsband durch die Axialbewegung des Konus mit Druck beaufschlagt, worauf eine plastische Verformung des Dichtungsbandes eintritt und hierdurch der Spalt zwischen Konus und Druckbehälter abgedichtet wird. Des Weiteren erfolgt eine plastische Verformung durch das Zuklappen der Oberschale auf die Unterschale, wodurch ein weiterer plastischer Verformungseffekt auftritt.

Derartige plastisch verformbare Dichtungsbänder bzw. Vakuumdichtungsbänder sind dem Fachmann bekannt.

Der Konus ist vorzugsweise geschlitzt, um ein Einlegen des Kabels zu ermöglichen.

Bei einer weiteren bevorzugten Ausführungsform weist die erfindungsgemäß ausgebildete Vorrichtung eine Dichtung zwischen Oberschale und Unterschale auf. Dabei ist die Dichtung zwischen Oberschale und Unterschale vorzugsweise als sich von einem Konus zum anderen Konus auf der Oberseite der Unterschale erstreckendes Dichtungselement ausgebildet. Das Dichtungselement ist dabei insbesondere in einer Nut auf der Oberseite der Unterschale angeordnet und als Dichtungsleiste ausgebildet.

Die Unterseite der Oberschale ist vorzugsweise eben ausgebildet und tritt beim Zuklappen mit der Dichtungsleiste in Kontakt, wobei diese vorzugsweise elastisch verformt wird und hierdurch ein entsprechender Dichtungseffekt erreicht wird. Die Dichtungsleiste ist vorzugsweise beidseitig der Achse der Vorrichtung angeordnet und verläuft axial von Konus zu Konus, wobei sie im Konusbereich eine Umlenkung um 90° erfährt und sich bis zum Spalt zwischen Konus und Konusführung erstreckt. Hierdurch wird nicht nur eine Abdichtung in radialer Richtung, sondern auch in axialer Richtung zwischen Oberschale und Unterschale erreicht.

Im Betrieb funktioniert die Vorrichtung in der folgenden Weise:
Bei geöffnetem Druckbehälter wird ein Kabel mit einer zu vernetzenden Verbindungsstelle in die beiden Konusse eingelegt und in die Unterschale gelegt. Die Konusse werden in der jeweiligen Innenführung justiert.

Nach dem Justieren der Konusse in der jeweiligen Innenführung werden die Dichtungsbänder beidseitig eines jeden Konus im Spaltbereich an der Unterschale angeordnet. Bei einem Schließen bzw. Zuklappen der Oberschale drückt sich das Dichtungsband in die noch verbleibenden Hohlräume.

Der Innenraum des Druckbehälters wird dann mit einem unter Druck stehenden Gas beaufschlagt und aufgeheizt. Hierdurch werden beide Konusse axial nach außen gepresst, wodurch sich der vorstehend erwähnte Abdichtungseffekt mit den Dichtungsbändern ergibt bzw. verstärkt, da sich die Dichtungsbänder plastisch verformen.

Nach Beendigung des Vernetzungsvorganges wird die Oberschale geöffnet und wird das Kabel mit der vernetzten Verbindungsstelle dem Druckbehälter entnommen. Die Konusse werden dabei vom Kabel entfernt.

In einer Weiterbildung der Erfindung ist am axialen Ende des Druckbehälters ein Anschlag zur Begrenzung der Axialbewegung des Konus vorgesehen.

Vorzugsweise sind Oberschale und Unterschale mittels Schraubverbindung verbunden. Bei dieser Ausführungsform besitzen Oberschale und Unterschale vorzugsweise seitlich vorstehende Flansche, in denen Schrauben befestigt sind bzw. durch die sich Schrauben zum Festklemmen der Flansche gegeneinander erstrecken.

Zum Aufheizen des Druckbehälters kann beispielsweise eine elektrische Heizung Anwendung finden, wobei die Vorrichtung vorzugsweise mehrere Heizzonen aufweisen kann, um unterschiedliche Kabelbereiche unterschiedlich aufheizen zu können.

Auch weist die Vorrichtung geeignete Zuführ- und Abführöffnungen für ein Druckmedium auf. Bei dem Druckmedium kann es sich beispielsweise um ein inertes Gas, wie Stickstoff, handeln.

Eine weitere bevorzugte Ausführungsform der Erfindung besteht darin, dass die Vorrichtung eine Vielzahl von Konussen mit gleichem Außendurchmesser, jedoch unterschiedlichen Innendurchmessern aufweist. Es kann somit ein und dieselbe Vorrichtung zum Vernetzen von unterschiedlich starken Kabeln eingesetzt werden. Die verwendeten Konusse sind daher äußerlich alle gleich, so dass immer der vorstehend beschriebene Dichtungseffekt mit der Innenführung der beiden Schalen erreicht wird. Die Konusse weisen jedoch unterschiedliche Innenabmessungen auf, so dass sie zur Aufnahme von unterschiedlich dicken Kabeln geeignet sind. Für entsprechende Kabelstärken kann daher ein jeweils angepasster Konus Verwendung finden.

Die Erfindung wird nachfolgend anhand eines Ausführungsbeispiels in Verbindung mit der Zeichnung im Einzelnen erläutert. Es zeigen:
- Figur 1: eine schematische Seitenansicht einer Vorrichtung zur Vernetzung mit aufgeklappter Oberschale;
- Figur 2: einen schematischen Teilschnitt durch die Vorrichtung der Figur 1 mit Schnittdarstellung eines Konus'; und
- Figur 3: eine räumliche Darstellung eines Teiles der Vorrichtung der Figuren 1 und 2.

Bei der dargestellten Vorrichtung handelt es sich um eine Vorrichtung zur Vernetzung der Isolierung von elektrischen Kabeln, insbesondere einer Verbindungsstelle derselben. Eine solche Isolierung kann beispielsweise aus Polyethylen bestehen, das mit der hier beschriebenen und dargestellten Vorrichtung durch Beaufschlagung mit Druck und Wärme in einen vernetzten Zustand gebracht wird.

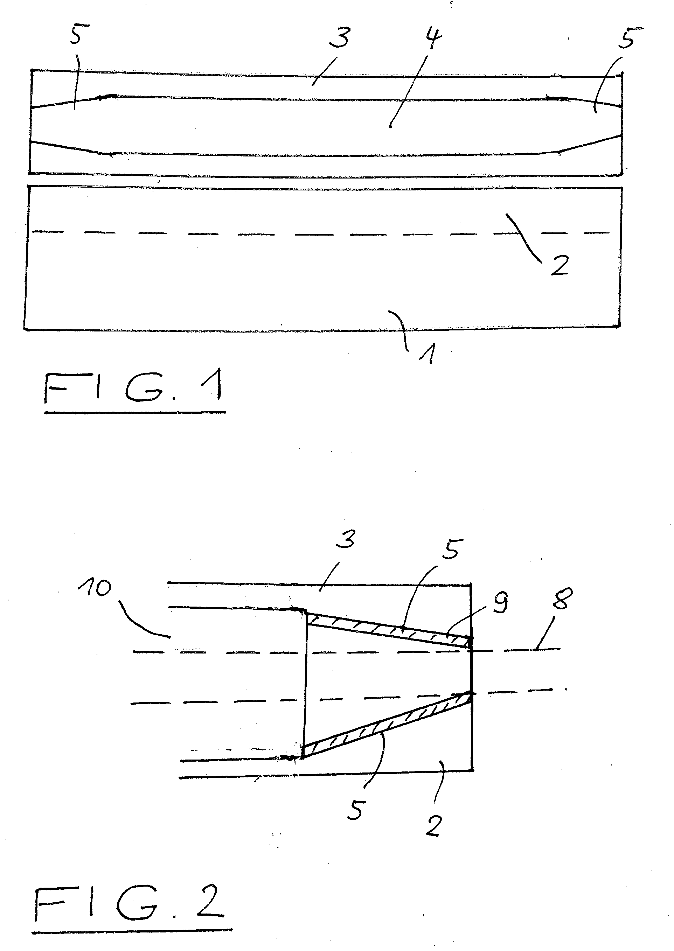

Die Vorrichtung weist hierzu einen Grundrahmen 1 und einen am Grundrahmen 1 angeordneten Druckbehälter auf, der das elektrische Kabel bzw. die Verbindungsstelle eines elektrischen Kabels aufnimmt. Der Druckbehälter wird hierbei von einer Unterschale 2, die fest am Grundrahmen 1 gelagert ist, und einer beweglichen Oberschale 3 gebildet, die zum Öffnen und Schließen des Druckbehälters auf- und zuklappbar ist. Die Figur 1 zeigt die Oberschale 3 im aufgeklappten Zustand.

In geschlossenem Zustand begrenzen beide Schalen einen etwa zylindrisch ausgebildeten inneren Druckraum 10, in dem das Kabel zur Durchführung des Vernetzungsvorganges gelagert ist. Die innere halbzylindrische Begrenzung des Druckraumes 10 durch die Oberschale 3 ist bei 4 dargestellt.

Es versteht sich, dass der Druckraum hermetisch abgeschlossen sein muss, um das zu vernetzende Kabel mit einem unter Druck stehenden Medium, beispielsweise Stickstoff, zu beaufschlagen. Insbesondere sind hierbei der Einführungsbereich und der Ausführungsbereich des Kabels in den Druckraum entsprechend abzudichten. Die entsprechende Bewerkstelligung der Abdichtung ist hierbei in Figur 2 dargestellt.

Man erkennt dabei, dass die Oberschale 3 und Unterschale 2 im jeweiligen axialen Endbereich eine konische Innenführung 5 aufweisen, an die ein beweglicher Konus 9 angepasst ist. Der Konus 9 wird durch den im Inneren des Druckbehälters herrschenden Überdruck axial nach außen gepresst. Zur Abdichtung zwischen Konus 9 und Konusführung 5 dient hierbei ein in Figur 2 nicht gezeigtes plastisch verformbares Dichtungsband 12.

Dieses plastisch verformbare Dichtungsband 12 ist auf der Unterschale 2 entlang dem Konus 9 im Bereich des entsprechenden Spaltes zwischen Konus und Unterschale angeordnet. Ein solches Dichtungsband 12 befindet sich auf beiden Seiten des Konus auf der Unterschale 2. Dieses Dichtungsband 12 wird durch die axiale Auswärtsbewegung des Konus 9 und/oder den Druck der zugeklappten Oberschale 3 verformt, so dass der Spalt zwischen Konus und Innenführung der Unterschale bzw. Oberschale entsprechend abgedichtet wird. Da es sich hierbei um eine plastische Verformung handelt, ist sichergestellt, dass das Dichtungsmaterial irreversibel in den entsprechenden Spalt zwischen Konus und Druckbehälter eindringt und diesen sicher abdichtet.

Ferner ist eine Dichtung 7 vorgesehen, die eine Abdichtung zwischen Oberschale 3 und Unterschale 2 im aufeinander geklappten Zustand bewirkt. Diese Dichtung 7 ist als Dichtungsleiste ausgebildet, die sich in einer in der Oberseite der Unterschale 2 angeordneten Nut 6 erstreckt. Die Dichtungsleiste erstreckt sich hierbei von Konus 9 zu Konus 9 auf beiden Seiten der Konusse in Axialrichtung. Im Bereich der Konusse 9 macht die Dichtungsleiste einen Schwenk um 90° und verläuft in Radialrichtung auf den Konus zu. Hierdurch wird nicht nur die Längsseite, sondern auch die Querseite der Vorrichtung entsprechend abgedichtet.

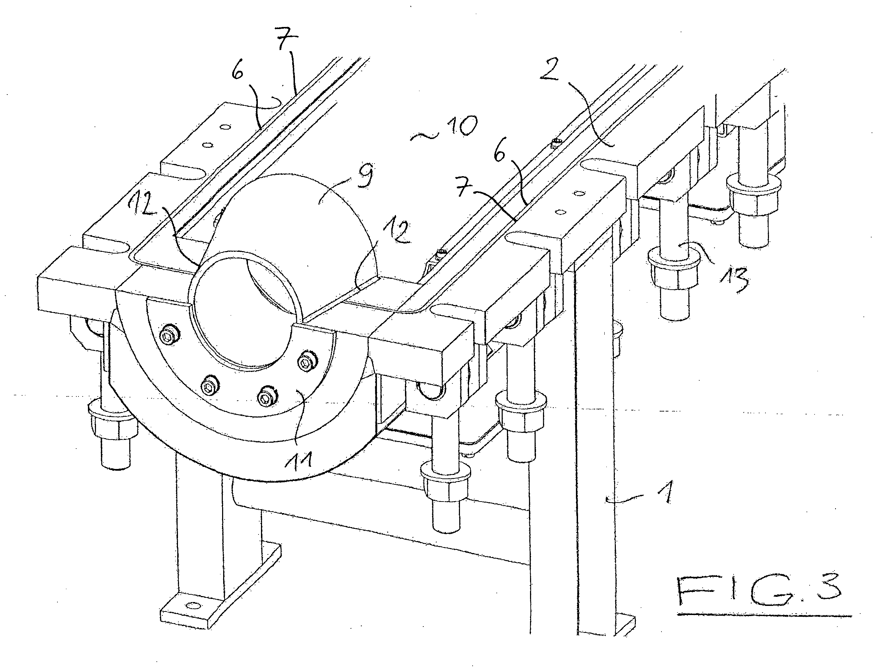

Figur 3 zeigt ferner Schrauben 13, die zur Fixierung der Oberschale an der Unterschale nach dem Zuklappen derselben dienen. Ein Anschlag 11 ist vorgesehen, der die radiale Auswärtsbewegung des entsprechenden Konus 9 begrenzt.

## Patentansprüche

1. Vorrichtung zur Vernetzung der Isolierung von elektrischen Kabeln, insbesondere einer Verbindungsstelle derselben, mit einem Grundrahmen (1),
einem am Grundrahmen (1) angeordneten Druckbehälter, in den das elektrische Kabel (8) bzw. die Verbindungsstelle eines elektrischen Kabels (8) aufnehmbar ist, gebildet von einer am Grundrahmen (1) befestigten Unterschale (2) und einer auf- und zuklappbar gelagerten Oberschale (3), wobei beide Schalen (2, 3) im zusammengeklappten Zustand einen zylindrischen Raum (10) zur Kabelaufnahme begrenzen,
je einem Konus (9) am jeweiligen axialen Ende des zylindrischen Raumes (10), der in einem entsprechenden konischen Innenabschnitt (5) der beiden Schalen angeordnet ist und durch den das Kabel führbar ist, und
einer Dichtung (12) zur Abdichtung des beweglichen Konus (9) gegenüber dem konischen Innenabschnitt (5),
**dadurch gekennzeichnet, dass**
jeder Konus (9) jeweils in dem als Innenführung (5) für den Konus (9) ausgebildeten konischen Innenabschnitt (5) axial beweglich gelagert ist und infolge eines erhöhten Drucks im Innenraum des Druckbehälters axial nach außen gegen ein eingelegtes Kabel drückbar ist.

2. Vorrichtung nach Anspruch 1, **dadurch gekennzeichnet, dass** die Dichtung zur Abdichtung des beweglichen Konus (9) gegenüber der Konusführung (5) als plastisch verformbares Dichtungsband (12) ausgebildet ist.

3. Vorrichtung nach Anspruch 2, **dadurch gekennzeichnet, dass** das Dichtungsband (12) im Bereich des Spaltes zwischen Konus (9) und Unterschale (2) auf der Oberseite der Unterschale (2) angeordnet ist.

4. Vorrichtung nach einem der vorangehenden Ansprüche, **dadurch gekennzeichnet, dass** sie eine Dichtung (7) zwischen Oberschale (3) und Unterschale (2) aufweist.

5. Vorrichtung nach Anspruch 4, **dadurch gekennzeichnet, dass** die Dichtung (7) zwischen Oberschale (3) und Unterschale (2) als sich von einem Konus (9) zum anderen Konus (9) auf der Oberseite der Unterschale (2) erstreckendes Dichtungselement ausgebildet ist.

6. Vorrichtung nach Anspruch 5, **dadurch gekennzeichnet, dass** das Dichtungselement als in einer Nut (6) auf der Oberseite der Unterschale (2) angeordnete Dichtungsleiste ausgebildet ist.

7. Vorrichtung nach einem der vorangehenden Ansprüche, **dadurch gekennzeichnet, dass** am axialen Ende des Druckbehälters ein Anschlag (11) zur Begrenzung der Axialbewegung des Konus (9) vorgesehen ist.

8. Vorrichtung nach einem der vorangehenden Ansprüche, **dadurch gekennzeichnet, dass** Oberschale (3) und Unterschale (2) mittels Schraubverbindung verbunden sind.

9. Vorrichtung nach einem der vorangehenden Ansprüche, **dadurch gekennzeichnet, dass** sie in mehrere Heizzonen aufgeteilt ist.

10. Vorrichtung nach einem der vorangehenden Ansprüche, **dadurch gekennzeichnet, dass** sie eine elektrische Heizung aufweist.

11. Vorrichtung nach einem der vorangehenden Ansprüche, **dadurch gekennzeichnet, dass** sie mit Zuführ- und Abführöffnungen für ein Druckmedium versehen ist.

12. Vorrichtung nach einem der vorangehenden Ansprüche, **dadurch gekennzeichnet, dass** sie eine Vielzahl von Konussen (9) mit gleichem Außendurchmesser, jedoch unterschiedlichem Innendurchmesser aufweist.

13. Vorrichtung nach einem der vorangehenden Ansprüche, **dadurch gekennzeichnet, dass** der bewegliche Konus (9) zum Einlegen des Kabels geschlitzt ist.

## Claims

1. A device for cross-linking the insulation of electric cables, especially a junction point thereof, comprising
a basic frame (1),
a pressure container disposed at the basic frame (1) which can take up the electric cable (8) or the junction point of an electric cable (8), formed by a lower shell (2) fixed at the basic frame (1) and an upper shell (3) which is supported to be tilted in an open or closed condition wherein both shells (2, 3) in their folded condition limit a cylindrical space (10) for taking up the cable,
a respective cone (9) at the respective axial end of the cylindrical space (10) which is arranged in a correspondingly conical inner portion (5) of the two shells and through which the cable can be led, and
a seal (12) for sealing the movable cone (9) with respect to the conical inner portion (5),
**characterized in that**
each cone (9) is axially movably supported in the conical inner portion (5) designed as inner guide (5) for the cone (9) and is adapted to be pressed axially outwardly against an inserted cable due to an increased pressure in the inner space of the pressure container.

2. The device according to claim 1, **characterized in that** the seal for sealing the movable cone (9) with respect to the cone guide (5) is formed as plastically deformable sealing band (12).

3. The device according to claim 2, **characterized in that** the sealing band (12) is disposed in the range of the gap between cone (9) and lower shell (2) on the upper side of the lower shell (2).

4. The device according to one of the preceding claims, **characterized in that** it has a seal (7) between upper shell (3) and lower shell (2).

5. The device according to claim 4, **characterized in that** the seal (7) between upper shell (3) and lower shell (2) is formed as sealing element extending from one cone (9) to the other cone (9) on the upper side of the lower shell (2).

6. The device according to claim 5, **characterized in that** the sealing element is formed as sealing ledge disposed in a groove (6) on the upper side of the lower shell (2).

7. The device according to one of the preceding claims, **characterized in that** a stopper (11) for limiting the axial movement of the cone (9) is provided at the axial end of the pressure container.

8. The device according to one of the preceding claims, **characterized in that** upper shell (3) and lower shell (2) are connected by means of a screw connection.

9. The device according to one of the preceding claims, **characterized in that** it is separated in several heating zones.

10. The device according to one of the preceding claims, **characterized in that** it has an electrical heating.

11. The device according to one of the preceding claims, **characterized in that** it is provided with supply openings and discharge openings for a pressure medium.

12. The device according to one of the preceding claims, **characterized in that** it has a plurality of cones (9) with identical outer diameter but different inner diameter.

13. The device according to one of the preceding claims, **characterized in that** the movable cone (9) is slotted for inserting the cable.

## Revendications

1. Dispositif de réticulation de l'isolation de câbles électriques, en particulier d'un point de raccordement de ceux-ci, avec
un cadre de base (1),
un récipient sous pression disposé sur le cadre de base (1), dans lequel le câble électrique (8) ou le point de raccordement d'un câble électrique (8) peut être logé, formé d'une coque inférieure (2) fixée sur le cadre de base (1) et d'une coque supérieure (3) montée de manière à pouvoir être ouverte et fermée, dans lequel les deux coques (2, 3), dans l'état fermé, délimitent un espace cylindrique (10) pour le logement de câble,
respectivement un cône (9) à l'extrémité axiale respective de l'espace cylindrique (10), qui est disposé dans une partie intérieure conique (5) correspondante des deux coques et à travers lequel le câble peut être guidé, et
un joint (12) destiné à étanchéifier le cône (9) mobile par rapport à la partie intérieure conique (5),
**caractérisé en ce que**
chaque cône (9) est monté axialement mobile respectivement dans la partie intérieure conique (5) réalisée en tant que guidage intérieur (5) pour le cône (9) et, à la suite d'une pression accrue dans l'espace intérieur du récipient sous pression, peut être pressé axialement vers l'extérieur contre un câble inséré.

2. Dispositif selon la revendication 1, **caractérisé en ce que** le joint destiné à étanchéifier le cône (9) mobile par rapport au guidage de cône (5) est réalisé en tant que bande d'étanchéité (12) déformable plastiquement.

3. Dispositif selon la revendication 2, **caractérisé en ce que** la bande d'étanchéité (12) est disposée dans la zone de la fente entre le cône (9) et la coque inférieure (2) sur la face supérieure de la coque inférieure (2).

4. Dispositif selon l'une quelconque des revendications précédentes, **caractérisé en ce qu'**il présente un joint (7) entre la coque supérieure (3) et la coque inférieure (2).

5. Dispositif selon la revendication 4, **caractérisé en ce que** le joint (7) entre la coque supérieure (3) et la coque inférieure (2) est réalisé en tant qu'élément d'étanchéité s'étendant d'un cône (9) à l'autre cône (9) sur la face supérieure de la coque inférieure (2).

6. Dispositif selon la revendication 5, **caractérisé en ce que** l'élément d'étanchéité est réalisé en tant que baguette d'étanchéité disposée dans une rainure (6) sur la face supérieure de la coque inférieure (2).

7. Dispositif selon l'une quelconque des revendications précédentes, **caractérisé en ce qu'**une butée (11) destinée à limiter le mouvement axial du cône (9) est prévue à l'extrémité axiale du récipient sous pression.

8. Dispositif selon l'une quelconque des revendications précédentes, **caractérisé en ce que** la coque supérieure (3) et la coque inférieure (2) sont reliées au moyen d'une liaison vissée.

9. Dispositif selon l'une quelconque des revendications précédentes, **caractérisé en ce qu'**il est divisé en plusieurs zones de chauffage.

10. Dispositif selon l'une quelconque des revendications précédentes, **caractérisé en ce qu'**il présente un chauffage électrique.

11. Dispositif selon l'une quelconque des revendications précédentes, **caractérisé en ce qu'**il est pourvu d'ouvertures d'amenée et d'évacuation pour un milieu sous pression.

12. Dispositif selon l'une quelconque des revendications précédentes, **caractérisé en ce qu'**il présente une pluralité de cônes (9) à diamètre extérieur identique, mais diamètre intérieur différent.

13. Dispositif selon l'une quelconque des revendications précédentes, **caractérisé en ce que** le cône (9) mobile est fendu pour l'insertion du câble.
